(19) Europäisches Patentamt
European Patent Office
Office européen des brevets

(11) EP 1 453 379 B1

(12) EUROPÄISCHE PATENTSCHRIFT

(45) Veröffentlichungstag und Bekanntmachung des Hinweises auf die Patenterteilung:
**30.03.2005 Patentblatt 2005/13**

(21) Anmeldenummer: **02803365.2**

(22) Anmeldetag: **13.11.2002**

(51) Int Cl.[7]: **A01N 43/56**
// A01N43:56, A01N61:00

(86) Internationale Anmeldenummer:
**PCT/EP2002/012672**

(87) Internationale Veröffentlichungsnummer:
**WO 2003/043422 (30.05.2003 Gazette 2003/22)**

(54) **SYNERGISTISCHE HERBIZIDE MITTEL ENTHALTEND HERBIZIDE AUS DER GRUPPE DER BENZOYLPYRAZOLE**

SYNERGISTISTIC HERBICIDES CONTAINING HERBICIDES FROM THE GROUP OF BENZOYLPYRAZOLES

AGENTS HERBICIDES SYNERGIQUES CONTENANT DES HERBICIDES DU GROUPES DES BENZOPYRAZOLES

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **22.11.2001 DE 10157339**

(43) Veröffentlichungstag der Anmeldung:
**08.09.2004 Patentblatt 2004/37**

(73) Patentinhaber: **Bayer CropScience GmbH**
**65929 Frankfurt (DE)**

(72) Erfinder:
- **HUFF, Hans, Philipp**
  **65817 Eppstein (DE)**
- **SCHMITT, Monika**
  **60318 Frankfurt am Main (DE)**
- **WILLMS, Lothar**
  **65719 Hofheim (DE)**
- **VAN ALMSICK, Andreas**
  **61184 Karben (DE)**
- **HACKER, Erwin**
  **65239 Hochheim (DE)**
- **BIERINGER, Hermann**
  **65817 Eppstein (DE)**

(56) Entgegenhaltungen:
**WO-A-01/74785** **WO-A-99/65314**

EP 1 453 379 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie herbizide Mittel, welche als Wirkstoff ein Herbizid aus der Gruppe der Benzoylpyrazole in Kombination mit mindestens einem weiteren Herbizid enthalten.

Herbizide aus der oben genannten Gruppe der Benzoylpyrazole sind aus zahlreichen Dokumenten bekannt. So werden in EP-A0 203 428, US 4,643,757, WO 97/23135 und in der prioritätsälteren, nicht vorveröffentlichten deutschen Patentanmeldung DE 10016116.2 einige Benzoylpyrazole mit herbizider Wirkung beschrieben.

Die Anwendung der aus diesen Schriften bekannten Benzoylpyrazole ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Aus WO 01/28341 sind Kombinationen von herbizid wirksamen Benzoyl-Derivaten zusammen mit anderen Herbiziden bekannt. Aus WO 97/31535, WO 98/68526, WO 98/54967, WO 00/02703 und WO 00/03591 sind Kombinationen von herbizid wirksamen Benzoylpyrazolen zusammen mit einigen anderen Herbiziden bekannt. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofit, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Aufgabe der vorliegenden Erfindung ist die Bereitstellung von herbiziden Mitteln mit gegenüber dem Stand der Technik verbesserten Eigenschaften.

Ein Gegenstand der Erfindung sind ausgewählte herbizide Mittel, gekennzeichnet durch einen wirksamen Gehalt an

A) mindestens einer Verbindung der allgemeinen Formel (I) sowie deren landwirtschaftlich üblichen Salze (Komponente A)

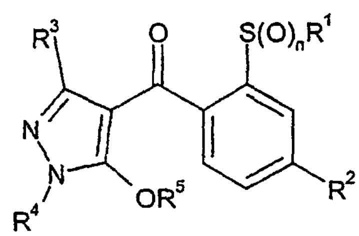

(I),

worin

$R^1$ Methyl oder Ethyl;
$R^2$ Trifluormethyl, Fluor, Chlor oder Brom;

$R^3$ Wasserstoff oder Methyl;
$R^4$ Methyl oder Ethyl;
$R^5$ Wasserstoff, Methylsulfonyl, Ethylsulfonyl, n-Propylsulfonyl, Phenylsulfonyl, 4-Methylphenylsulfonyl, Benzyl, Benzoylmethyl, Nitrobenzoylmethyl oder 4-Fluorbenzoylmethyl und
n 0, 1, oder 2 bedeuten, und

B) mindestens einer Verbindung (Komponente B) aus einer der Gruppen

B1 Inhibitoren der Biosynthese von verzweigten Aminosäuren:
amidosulfuron (B1.1), bensulfuron (B1.2), ethoxysulfuron (B1.3), halosulfuron (B1.4), imazethapyr (B1.5), iodosulfuron-methyl-sodium (B1.6), metsulfuron (B1.7), nicosulfuron (B1.8), sulfosulfuron (B1.9), thifensulfuron-methyl (B1.10), tribenuron (B1.11), N-[(4,6-Dimethoxy-pyrimidin-2-yl)-aminocarbonyl]-2-methoxycarbonyl-5-methylsulfonylaminomethyl-benzolsulfonamid (mesosulfuron) (B1.12) und N-[(4,6-dimethoxy-pyrimidin-2-yl)-aminocarbonyl]-2-dimethylaminocarbonyl-5-formylaminobenzolsulfonamid (foramsulfuron) (B1.13), procarbazone sodium (MKH 6561) (B1.14), flucarbazone (MKH 6562) (B1.15), amicarbazone (MKH 31866) (B1.16), florasulam (B1.17), flupyrsulfuron-methyl-sodium (B1.18);

B2 Inhibitoren des Photosynthese Elektronen Transports:
atrazin (B2.1), bromoxynil (82.2), ioxynil (B2.3), isoproturon (B2.4), metribuzin (B2.5), propanil (B2.6);

B3 Synthetische Auxine:
MCPA (B3.1), 2,4 DP (83.2), mecoprop (B3.3), dicamba (B3.4), diflufenzopyr (B3.5), fluroxypyr (B3.6), quinclorac (B3.7);

B4 Inhibitoren der Fettsäurebiosynthese:
benthiocarb (B4.1), clodinafop-propargyl (B4.2), diclofop-methyl (B4.3), fenoxaprop-p-ethyl (B4.4), tralkoxydim (B4.5);

B5 Inhibitoren der Zellteilung:
acetochlor (B5.1), alachlor (B5.2), anilofos (B5.3), flufenacet (B5.4), metolachlor (B5.5), thenylchlor (B5.6), flufenacet (B5.7), mefenacet (B5.8);

B6 Inhibitoren der Fettsäurebiosynthese-Carotinoidbiosynthese:
diflufenican (B6.1), clomazone (B6.2);

B7 glyphosate (B7.1) und

B8 glufosinate (B8.1 ),

wobei diese Mittel die Verbindungen der Formel (I) oder deren Salze (Komponente A) und die Verbindungen der Gruppen B1 bis B8 (Komponente B) in einem Gewichtsverhältnis von 1:2000 bis 2000:1 enthalten.

Die Verbindungen der Formel (I) sind aus WO 01/74785 bekannt und können beispielsweise nach den darin beschriebenen oder aus DE 25 13 750 und EP-A 0 186 117 bekannten Verfahren hergestellt werden. Die Offenbarung der drei vorgenannten Schriften gilt hiermit als Bestandteil dieser Beschreibung.

Die chemischen Strukturen der oben mit ihren Common Names genannten Wirkstoffe sind beispielsweise aus "The Pesticide Manual" 12. Auflage, 2000, British Crop Protection Council, bekannt. Foramsulfuron ist z.B. aus WO 95/10507 und mesosulfuron ist z.B. aus WO 95/10507 als Herbizid bekannt.

Bevorzugt sind herbizide Mittel, die als Komponente (A) eine Verbindung der Formel (I) nachfolgend genannter Bedeutung enthalten:

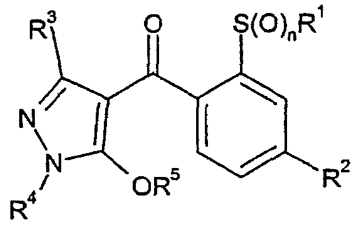

(I)

| Nr. | $R^1$ | $R^2$ | $R^3$ | $R^4$ | $R^5$ | n |
|---|---|---|---|---|---|---|
| (A1) | $CH_3$ | $CF_3$ | H | $CH_3$ | H | 2 |
| (A2) | $CH_3$ | $CF_3$ | $CH_3$ | $CH_3$ | H | 2 |
| (A3) | $CH_3$ | $CF_3$ | $CH_3$ | $CH_2CH_3$ | H | 2 |
| (A4) | $CH_3$ | $CF_3$ | H | $CH_2CH_3$ | H | 2 |

Von besonderem Interesse sind dabei herbizide Mittel mit einem synergistisch wirksamen Gehalt an einer oder mehreren der folgenden Kombinationen von zwei Verbindungen (A) + (B):

(A1)+(B1.1), (A1 )+(B1.2), (A1 )+(B1.3), (A1)+(B1.4), (A1)+(B1.5), (A1 )+(B1.6), (A1)+(B1.7), (A1 )+(B1.8), (A1)+(B1.9). (A1)+(B1.01), (A1 )+(B1.11 ), (A1)+(B1.12), (A1 )+(B1.13), (A1 )+(B1.14), (A1)+(B1.15), (A1 )+(B1.16), (A1)+(B1.17), (A1 )+(B1.18); (A2)+(B1.1), (A2)+(B1.2), (A2)+(B1.3), (A2)+(B1.4), (A2)+(B1.5), (A2)+(B1.6), (A2)+(B1.7), (A2)+(B1.8), (A2)+(B1.9), (A2)+(B1.01), (A2)+(B1.11), (A2)+(B1.12), (A2)+(B1.13), (A2)+(B1.14), (A2)+(B1.15), (A2)+(B1.16), (A2)+(B1.17), (A2)+(B1.18);

(A3)+(B1.1), (A3)+(B1.2), (A3)+(B1.3), (A3)+(B1.4), (A3)+(B1.5), (A3)+(B1.6), (A3)+(B1.7), (A3)+(B1.8), (A3)+(B1.9), (A3)+(B1.01), (A3)+(B1.11), (A3)+(B1.12), (A3)+(B1.13), (A3)+(B1.14), (A3)+(B1.15), (A3)+(B1.16), (A3)+(B1.17), (A3)+(B1.18);

(A4)+(B1.1), (A4)+(B1.2), (A4)+(B1.3), (A4)+(B1.4), (A4)+(B1.5), (A4)+(B1.6), (A4)+(B1.7), (A4)+(B1.8), (A4)+(B1.9), (A4)+(B1.01), (A4)+(B1.11), (A4)+(B1.12), (A4)+(B1.13), (A4)+(B1.14), (A4)+(B1.15), (A4)+(B1.16), (A4)+(B1.17), (A4)+(B1.18);

(A1)+(B2.1), (A1 )+(B2.2), (A1 )+(B2.3), (A1 )+(B2.4), (A1 )+(B2.5);

(A2)+(B2.1), (A2)+(B2.2), (A2)+(B2.3), (A2)+(B2.4), (A2)+(82.5);

(A3)+(B2.1), (A3)+(B2.2), (A3)+(B2.3), (A3)+(B2.4), (A3)+(B2.5);

(A4)+(B2.1), (A4)+(B2.2), (A4)+(B2.3), (A4)+(B2.4), (A4)+(B2.5);

(A1)+(B3.1), (A1)+(B3.2), (A1)+(B3.3), (A1)+(B3.4), (A1)+(B3.5), (A1)+(B3.6) (A1 )+(B3.7);

(A2)+(B3.1), (A2)+(B3.2), (A2)+(B3.3), (A2)+(B3.4), (A2)+(B3.5), (A2)+(B3.6), (A2)+(B3.7);

(A3)+(B3.1), (A3)+(B3.2), (A3)+(B3.3), (A3)+(B3.4), (A3)+(B3.5), (A3)+(B3.6), (A3)+(B3.7);

(A4)+(83.1), (A4)+(B3.2), (A4)+(B3.3), (A4)+(B3.4), (A4)+(B3.5), (A4)+(B3.6), (A4)+(B3.7);

(A1)+(B4.1). (A1 )+(B4.2), (A1 )+(B4.3), (A1 )+(B4.4), (A1)+(B4.5);

(A2)+(B4.1), (A2)+(B4.2), (A2)+(B4.3), (A2)+(B4.4), (A2)+(B4.5);

(A3)+(B4.1), (A3)+(B4.2), (A3)+(B4.3), (A3)+(B4.4), (A3)+(B4.5);

(A4)+(B4.1), (A4)+(B4.2), (A4)+(B4.3), (A4)+(B4.4), (A4)+(84.5);

(A1)+(B5.1), (A1)+(B5.2), (A1)+(B5.3), (A9)+(B5.4), (A1)+(B5.5), (A1)+(B5.6), (A1)+(85.7), (A1)+(85.8);

(A2)+(B5.1), (A2)+(B5.2), (A2)+(B5.3), (A2)+(B5.4), (A2)+(B5.5), (A2)+(B5.6), (A2)+(B5.7), (A2)+(B5.8);

(A3)+(B5.1), (A3)+(B5.2), (A3)+(B5.3), (A3)+(B5.4), (A3)+(B5.5), (A3)+(B5.6), (A3)+(B5.7), (A3)+(B5.8);

(A4)+(B5.1), (A4)+(B5.2), (A4)+(B5.3), (A4)+(B5.4), (A4)+(B5.5), (A4)+(B5.6), (A4)+(B5.7), (A4)+(B5.8);

(A1)+(B6.1), (A1)+(B6.2), (A2)+(B6.1), (A2)+(B6.2), (A3)+(B6.1), (A3)+(B6.2), (A4)+(B6.1), (A4)+(B6.2);

(A1)+(B7.1), (A2)+(B7.1), (A3)+(B7.1), (A4)+(B7.1);

(A1)+(B8.1). (A2)+(B8.1), (A3)+(B8.1), (A4)+(B8.1).

In den erfindungsgemäßen Kombinationen benötigt man in der Regel Aufwandmengen im Bereich von 1 bis 2000 g, vorzugsweise 10 bis 500 g, besonders bevorzugt 10 bis 250 g Aktivsubstanz pro Hektar (ai/ha) der Komponente A) und 1 bis 2000 g, vorzugsweise 1 bis 500 g, besonders bevorzugt 5 bis 250 g der Komponente B).

Die Gewichtsverhältnisse der einzusetzenden Komponenten A) zu B) können in weiten Bereichen variiert werden. Vorzugsweise ist das Mengenverhältnis im Bereich von 1:50 bis 50:1, insbesondere im Bereich von 1:20 bis 20:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide- (beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe A) und B) resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao u.a. sowie im Obst- und Weinbau. Besonders geeignet sind sie auf Grund ihrer guten Verträglichkeit für die Anwendung in Getreide und Mais, ganz besonders in Getreide.

Die erfindungsgemäßen Mittel erfassen ein breites Unkrautspektrum. Sie eignen sich zur Bekämpfung von annuellen und perennierenden Schadpflanzen wie z.B. aus den Spezies Abuthylon, Alopecurus, Avena, Chenopodium, Cynoden, Cyperus, Digitaria, Echinochloa, Elymus, Galium, Ipomoea, Kochia, Lamium, Matricaria, Polygonum, Scirpus, Setaria, Sorghum, Veronica, Viola und Xanthium.

Ein weiterer Vorteil der erfindungsgemäße Mittel besteht auch in ihrer ausgezeichneten Wirkung gegen viele mittlerweile gegen Sulfonylharnstoffe resistent gewordene Schadpflanzen, wie beispielsweise Kochia.

Die erfindungsgemäßen herbiziden Mittel zeichnen sich auch dadurch aus, daß die in den Kombinationen verwendeten und wirksamen Dosierungen der Komponenten A) und B) gegenüber einer Einzeldosierung verringert ist, so daß eine Reduzierung der nötigen Aufwandmengen der Wirkstoffe ermöglicht wird (synergistischer Effekt).

Gegenstand der Erfindung ist auch ein Verfahren zur Bekämpfung von unerwünschtem Pflanzenwuchs, dadurch gekennzeichnet, daß man ein oder mehrere Herbizide A) mit einem oder mehreren Herbiziden B) auf die Schadpflanzen, Pflanzenteile davon oder die Anbaufläche appliziert.

Bei der gemeinsamen Anwendung von Herbiziden des Typs A) und B treten überadditive (= synergistische) Effekte auf. Dabei ist die Wirkung in den Kombinationen stärker als die zu erwartende Summe der Wirkungen der eingesetzten Einzelherbizide und der Wirkung des jeweiligen einzelnen Herbizids A) und B). Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Wirkstoffkombinationen können sowohl als Mischformulierungen der Komponenten A) und B), gegebenenfalls mit weiteren üblichen Formulierungshilfsmitteln vorliegen, die dann in üblicher Weise mit

Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten A) und B) können auf verschiedene Arten formuliert werden, je nachdem welche biologischen und/oder chemisch-physikalischen Parameter vorgegeben sind. Als allgemeine Formulierungsmöglichkeiten kommen z.B. in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formutierungen, Mikrokapseln oder Wachse.

Die einzelnen Formulierungstypen sind im Prinzip bekannt und werden z.B. beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnakker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weisegewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen A) und B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvem, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden)

ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten A) und B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines WirkstoffslWirksstoffgemischs mit 6 Gew.-Teilen Alkylphenolpolyglykolether (Triton X 207), 3 Gew.-Teilen isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.

d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile eines Wirkstoffs/Wirksstoffgemischs,
10 Gew.-Teile ligninsulfonsaures Calcium,
5 Gew.-Teile Natriumlaurylsulfat, 3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Kulturpflanzen wurden im Freiland auf Parzellen von 5 bis 10 $m^2$ Größe auf unterschiedlichen Böden und unter verschiedenen Klimabedingungen herangezogen, wobei das natürliche Vorhandensein von Schadpflanzen beziehungsweise deren Samen im Boden für die Versuche genutzt wurde. Die Behandlung mit den erfindungsgemäßen Mitteln beziehungsweise mit den einzel angewandten Herbiziden A) und B) erfolgte nach dem Auflaufen der Schad- und der Kulturpflanzen in der Regel im 2- bis 4-Blattstadium. Die Applikation der als WG, WP oder EC formulierten Wirkstoffe oder Wirkstoffkombinationen erfolgte im Nachauflauf. Nach 2 bis 8 Wochen erfolgte eine optische Bonitur im Vergleich zu einer unbehandelten Vergleichsgruppe. Dabei zeigte sich, daß die erfindungsgemäßen Mittel eine synergistische herbizide Wirkung gegen wirtschaftlich bedeutende mono- und dikotyle Schadpflanzen aufweisen, d.h. daß die erfindungsgemäßen Mittel meist eine höhere, teilweise deutlich höhere herbizide Wirkung

aufweisen als es der Summe der Wirkungen der Einzelherbizide entspricht.

Darüber hinaus liegen die herbiziden Wirkungen der erfindungsgemäßen Mittel über den Erwartungswerten nach Colby. Die Kulturpflanzen wurden hingegen durch die Behandlung nicht oder nur unwesentlich geschädigt.

Wenn die beobachteten Wirkungswerte der Mischungen bereits die formale Summe der Werte zu den Versuchen mit Einzelapplikationen übertreffen, dann übertreffen sie den Erwartungswert nach Colby ebenfalls, der sich nach folgender Formel errechnet (vgl. S. R. Colby; in Weeds 15 (1967) S. 20 bis 22):

$$E = A+B - \frac{AxB}{100}$$

Dabei bedeuten:

A, B = jeweils Wirkung der Komponente A bzw.B in Prozent bei einer Dosierung von a bzw. b Gramm ai /ha.
E = Erwartungswert in % bei einer Dosierung von a+b Gramm ai/ha.

Die beobachteten Werte der nachfolgenden Versuchsbeispiele liegen über den Erwartungswerten nach Colby. Tabelle 1 zeigt die versuchsgemäßen Komponenten (A) und (B). In den Tabellen 2 bis 4 sind die herbiziden Wirkungen der einzelnen Komponenten (A) und (B), die der erfindungsgemäße Mischungen und der theoretische Wert nach Colby angegeben.

Tabelle 1:

| | |
|---|---|
| 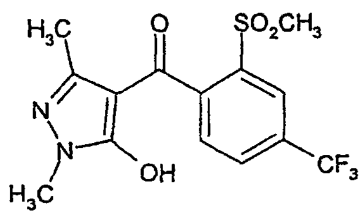 A2 | 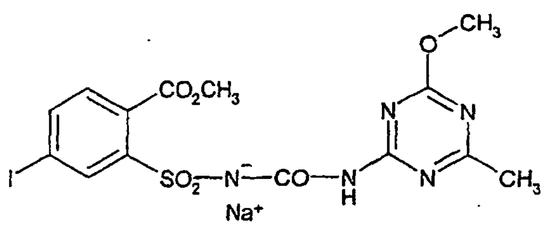 B1.6 |

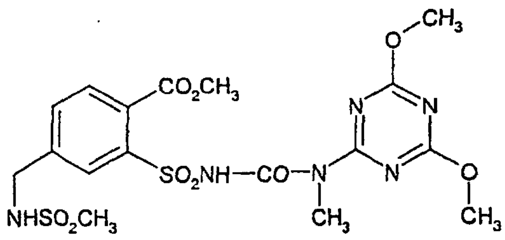

B1.12

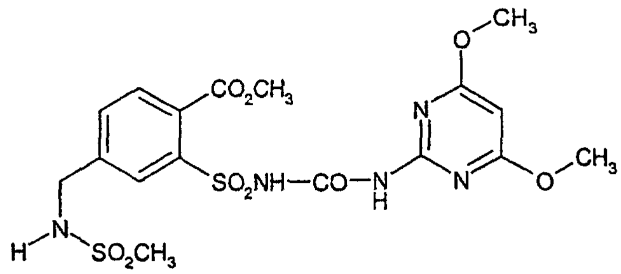

B1.13

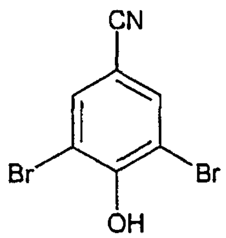

B2.2

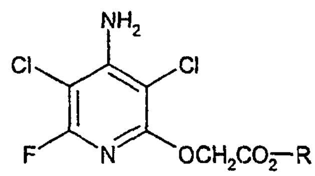

R: $CH_3(CH_2)_3OCH_2CH(CH_3)$
oder
$CH_3(CH_2)_5CH(CH_3)$

B3.6

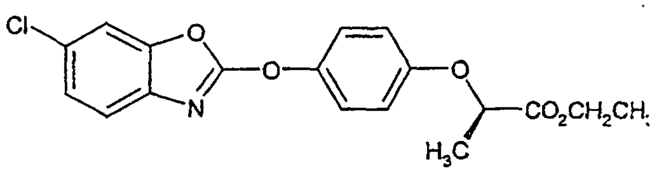

B4.4

Tabelle 2:

| Herbizid | Dosierung | Herbizide Wirkung gegen POLCO | Wert nach Colby |
|---|---|---|---|
| A2 | 75 | 90% | |
| B1.12 | 2.5 | 56% | |
| B4.4 | 7.5 | 70% | |
| | | | |
| A2 + B1.6 | 75 + 2.5 | 99% | 96% |
| A2 + B1.12 | 75 + 7.5 | 99% | 96% |

Tabelle 3:

| Herbizid | Dosierung | Herbizide Wirkung gegen AVEFA | Wert nach Colby |
|---|---|---|---|
| A2 | 75 | 20% | |
| B1.12 | 7.5 | 70% | |
| B4.4 | 60 | 80% | |
| | | | |
| A2 + B1.12 | 75 + 7.5 | 85% | 76% |
| A2 + B4.4 | 75 + 60 | 90% | 84% |

Tabelle 4:

| Herbizid | Dosierung | Herbizide Wirkung gegen GALAP | Wert nach Colby |
|---|---|---|---|
| A2 | 75 | 84% | |
| B2.2 | 280 | 61% | |
| A2 + B2.2 | 75 + 280 | 99% | 94% |

## Patentansprüche

**1.** Herbizide Mittel, **gekennzeichnet durch** einen wirksamen Gehalt an

A) mindestens einer Verbindung der allgemeinen Formel (I) sowie deren landwirtschaftlich üblichen Salze (Komponente A)

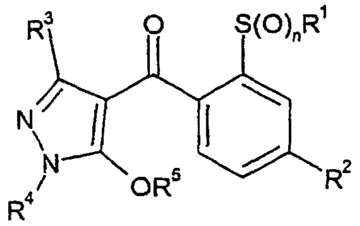

(I),

worin

$R^1$ Methyl oder Ethyl;
$R^2$ Trifluormethyl, Fluor, Chlor oder Brom;
$R^3$ Wasserstoff oder Methyl;
$R^4$ Methyl oder Ethyl;
$R^5$ Wasserstoff, Methylsulfonyl, Ethylsulfonyl, n-Propyisutfonyt, Phenylsulfonyl, 4-Methylphenylsulfonyl, Benzyl, Benzoylmethyl, Nitrobenzoylmethyl oder 4-Fluorbenzoylmethyl und
n 0, 1, oder 2 bedeuten, und

B) mindestens einer Verbindung (Komponente B) aus einer der Gruppen

B1 Inhibitoren der Biosynthese von verzweigten Aminosäuren:
amidosulfuron (B1.1), bensulfuron (B1.2), ethoxysulfuron (B1.3), halosulfuron (B1.4), imazethapyr (B1.5), iodosulfuron-methyl-sodium (81.6), metsulfuron (B1.7), nicosulfuron (B1.8), sulfosulfuron (B1.9), thifensulfuron-methyl (B1.10), tribenuron (B1.11), N-[(4,6-Dimethoxy-pyrimidin-2-yl)-aminocarbonyl]-2-methoxycarbonyl-5-methylsulfonylaminomethyl-benzolsulfonamid (mesosulfuron) (B1.12) und N-[(4,6-dimethoxy-pyrimidin-2-yl)-aminocarbonyl]-2-dimethylaminocarbonyl-5-formylaminobenzolsulfonamid (foramsulfuron) (B1.13), procarbazone sodium (MKH 6561) (B1.14), flucarbazone (MKH 6562) (B1.15), amicarbazone (MKH 31866) (B1.16), florasulam (B1.17), flupyrsulfuron-methyl-sodium (B1.18);

B2 Inhibitoren des Photosynthese Elektronen Transports:
atrazine (B2.1), bromoxynil (B2.2), isoproturon (B2.3), metribuzin (B2.4), propanil (B2.5);

B3 Synthetische Auxine:
MCPA (B3.1), 2,4-D (B3.2), mecoprop (CCMP) (B3.3), dicamba (B3.4), diflufenzopyr (B3.5), fluroxypyr (B3.6), quinclorac (B3.7);

B4 Inhibitoren der Fettsäurebiosynthese:
benthiocarb (B4.1), clodinafop-propargyl (B4.2), diclofop-methyl (B4.3), fenoxaprop-P-ethyl (B4.4), tralkoxydim (B4.5);

B5 inhibitoren der Zellteilung:
acetochlor (B5.1), alachlor (B5.2), anilofos (B5.3), flufenacet (85.4), metolachlor (B5.5), thenylchlor (B5.6), flufenacet (B5.7), mefenacet (B5.8);

B6 Inhibitoren der Fettsäurebiosynthese-Carotinoidbiosynthese:
diflufenican (B6.1), clomazone (B6.2);

B7 glyphosate (B7.1) und

B8 glufosinate (B8.1 ),

wobei diese Mittel die Verbindungen der Formel (I) oder deren Salze (Komponente A) und die Verbindungen der Gruppen B1 bis B8 (Komponente B) in einem Gewichtsverhältnis von 1:2000 bis 2000:1 enthalten.

**2.** Herbizide Mittel nach Anspruch 1, **dadurch gekennzeichnet, daß** sie als Komponente A) eine Verbindung der allgemeinen Formel (I) enthalten, worin

$R^1$ Methyl;
$R^2$ Trifluormethyl;
$R^3$ Wasserstoff oder Methyl;
$R^4$ Methyl oder Ethyl;
$R^5$ Wasserstoff und
n 2

bedeuten.

**3.** Herbizide Mittel nach Anspruch 1 oder 2, **dadurch gekennzeichnet, daß** das Gewichtsverhältnis A:B der kombinierten Herbizide A) und B) im Bereich von 1:50 bis 50:1 liegt.

**4.** Herbizide Mittel nach Anspruch 3, worin das Gewichtsverhältnis A:B der kombinierten Herbizide A) und B) im Bereich von 1:20 bis 20:1 liegt.

**5.** Herbizide Mittel nach einem der Ansprüche 1 bis 4, **dadurch gekennzeichnet, daß** sie 0,1-99 Gew.-% Herbizide A) und B) und 99 bis 0,1 Gew.-% im Pflanzenschutz übliche Formulierungsmittel enthalten.

**6.** Verfahren zur Bekämpfung von unerwünschtem Pflanzenwuchs, **dadurch gekennzeichnet, daß** man ein oder mehrere Herbizide A) mit einem oder mehreren Herbiziden B) auf die Schadpflanzen, Pflanzenteile davon oder die Anbaufläche appliziert, wobei die Kombination der Herbzide A) und B) wie in einem der Ansprüche 1 bis 5 definiert ist.

**7.** Verwendung einer Kombination aus Herbiziden A) und B) als herbizides Mittel zur Bekämpfung von unerwünschtem Pflanzenwuchs, wobei die Kombination der Herbizide A) und B) wie in einem der Ansprüche 1 bis 5 definiert ist.

**Claims**

**1.** A herbicidal composition, comprising an effective amount of

A) at least one compound of the formula (I) or an agriculturally suitable salt thereof (component A)

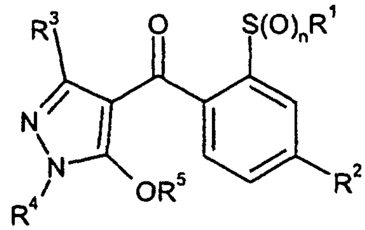

(I),

in which

$R^1$ is methyl or ethyl;
$R^2$ is trifluoromethyl, fluorine, chlorine or bromine;
$R^3$ is hydrogen or methyl;
$R^4$ is methyl or ethyl;
$R^5$ is hydrogen, methylsulfonyl, ethylsulfonyl, n-propylsulfonyl, phenylsulfonyl, 4-methylphenylsulfonyl, benzyl, benzoylmethyl, nitrobenzoylmethyl or 4-fluorobenzoylmethyl and
n is 0, 1, or 2, and

B) at least one compound (component B) from one of the following groups

B1 inhibitors of the biosynthesis of branched amino acids:
amidosulfuron (B1.1), bensulfuron (B1.2), ethoxysulfuron (B1.3), halosulfuron (B1.4), imazethapyr (B1.5), iodosulfuron-methyl-sodium (B1.6), metsulfuron (B1.7), nicosulfuron (B1.8), sulfosulfuron (B1.9), thifensulfuron-methyl (B1.10), tribenuron (B1.11 ), N-[(4,6-dimethoxypyrimidin-2-yl)aminocarbonyl]-2-methoxycarbonyl-5-methylsulfonylaminomethylbenzenesulfonamide (mesosulfuron) (B1.12) and N-[(4,6-dimethoxypyrimidin-2-yl)aminocarbonyl]-2-dimethylaminocarbonyl-5-formylaminobenzenesulfonamide (foramsulfuron) (B1.13), procarbazone sodium (MKH 6561) (B1.14), flucarbazone (MKH 6562) (B1.15), amicarbazone (MKH 31866) (B1.16), florasulam (B1.17), flupyrsulfuron-methyl-sodium (B1.18);

B2 inhibitors of the photosynthesis electron transport:
atrazine (B2.1), bromoxynil (B2.2), isoproturon (B2.3), metribuzin (B2.4), propanil (B2.5);

B3 synthetic auxins:
MCPA (B3.1), 2,4-D (B3.2), mecoprop (CCMP) (B3.3), dicamba (B3.4), diflufenzopyr (B3.5), fluroxypyr (B3.6), quinclorac (B3.7);

B4 inhibitors of fatty acid biosynthesis:
benthiocarb (B4.1), clodinafop-propargyl (B4.2), diclofop-methyl (B4.3), fenoxaprop-P-ethyl (B4.4), tralkoxydim (B4.5);

B5 inhibitors of cell division:
acetochlor (B5.1), alachlor (B5.2), anilofos (B5.3), flufenacet (B5.4), metolachlor (B5.5), thenylchlor (B5.6), flufenacet (B5.7), mefenacet (B5.8);

B6 inhibitors of fatty acid biosynthesis/carotinoid biosynthesis:
diflufenican (B6.1), clomazone (B6.2);

B7 glyphosate (B7.1) and

B8 glufosinate (B8.1),

where this composition comprises the compounds of the formula (I) or salts thereof (component A) and the compounds of groups B1 to B8 (component B) in a weight ratio of from 1:2000 to 2000:1.

**2.** The herbicidal composition as claimed in claim 1, which comprises, as component A), a compound of the formula

(I) in which

- $R^1$ is methyl;
- $R^2$ is trifluoromethyl;
- $R^3$ is hydrogen or methyl;
- $R^4$ is methyl or ethyl;
- $R^5$ is hydrogen and
- n is 2.

**3.** The herbicidal composition as claimed in claim 1 or 2, wherein the weight ratio A:B of the combined herbicides A) and B) is in the range from 1:50 to 50:1.

**4.** The herbicidal composition as claimed in claim 3, wherein the weight ratio A:B of the combined herbicides A) and B) is in the range from 1:20 to 20:1.

**5.** The herbicidal composition as claimed in any of claims 1 to 4, which comprises 0.1-99% by weight of herbicides A) and B) and 99 to 0.1% by weight of formulating agents customary in crop protection.

**6.** A method for controlling unwanted vegetation, which comprises applying one or more herbicides A) and one or more herbicides B) to the harmful plants, to parts of the harmful plants or to the area under cultivation, the combination of the herbicides A) and B) being as defined in any of claims 1 to 5.

**7.** The use of a combination of herbicides A) and B) as a herbicidal composition for controlling unwanted vegetation, the combination of the herbicides A) and B) being as defined in any of claims 1 to 5.

**Revendications**

**1.** Agents herbicides **caractérisés par** une teneur efficace en

A) au moins un composé de formule générale (I) ainsi que leurs sels usuels en agriculture (composant A)

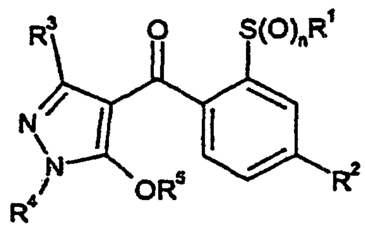

(I),

où

- $R^1$ représente un groupe méthyle ou éthyle ;
- $R^2$ représente un groupe trifluorométhyle, un atome de fluor, de chlore ou de brome ;
- $R^3$ représente un atome d'hydrogène ou un groupe méthyle ;
- $R^4$ représente un groupe méthyle ou éthyle ;
- $R^5$ représente un atome d'hydrogène, un groupe méthylsulfonyle, éthylsulfonyle, n-propylsulfonyle, phénylsulfonyle, 4-méthylphénylsulfonyle, benzyle, benzoylméthyle, nitrobenzoylméthyle ou 4-fluorobenzoylméthyle et
- n vaut 0, 1 ou 2, et

B) représente au moins un composé (composant B) pris dans l'un des groupes
B1 inhibiteurs de la biosynthèse d'acides aminés ramifiés,
amidosulfuron (B1.1), bensulfuron (B1.2), éthoxysulfuron (B1.3), halosulfuron (B1.4), imazethapyr (B1.5), iodosulfuron-méthyl-sodium (B1.6), metsulfuron (B1.7), nicosulfuron (B1.8), sulfosulfuron (B1.9), thifénsulfuronméthyl (B1.10), tribenuron (B1.11), N-[(4,6-diméthoxy-pyrimidin-2-yl)-aminocarbonyl]-2-méthoxycarbonyl-5-méthylsulfonylaminométhylbenzènesulfonamide (mesosulfurone) (B1.12) et N-[(4,6-diméthoxy-pyrimidin-2-yl)-aminocarbonyl-2-diméthylaminocarbonyl-5-formylaminobenzènesulfonamide (foramsulfurone) (B1.13), procarbazon sodium (MKH 6561) (B1.14), flucarbazone (MKH 6562) (B1.15), amicarbazon (MKH 31866) (B1.16), florasulam (B1.17), flupyrsulfuron-méthyl-sodium (B1.18) ;
B2 inhibiteurs du transport d'électrons dans la photosynthèse :
atrazine (B2.1), bromoxynil (B2.2), isoproturon (B2.3), metribuzine (B2.4), propanil (B2.5) ;
B3 auxines synthétiques
MCPA (B3.1), 2,4-D (B3.2), mecoprop (CCMP) (B3.3), dicamba (B3.4), diflufenzopyr (B3.5), fluroxypyr (B3.6), quinclorac (B3.7) ;
B4 inhibiteurs de la biosynthèse d'acides gras :
benthiocarb (B4.1), clodinafop-propargyl (B4.2), diclofop-méthyl (B4.3), fenoxaprop-P-éthyl (B4.4), tralkoxydim (B4.5) ;
B5 inhibiteurs de la division cellulaire :
acetochlor (B5.1), alachlor (B5.2), anilofos (B5.3), flufenacet (B5.4), metolachlor (B5.5), thenylchlor (B5.6), flufenacet (B5.7), mefenacet (B5.8) ;
B6 inhibiteurs de la biosynthèse d'acides grasbiosynthèse de caroténoïdes
diflufenican (B6.1), clomazone (B6.2);
B7 glyphosate (B7.1) et
B8 glufosinate (B8.1),

ces agents renferment les composés de formule (I) ou leurs sels (composant A) et les composés des groupes B1 à B8 (composant B) dans un rapport pondéral de 1:2000 à 2000:1.

**2.** Agents herbicides selon la revendication 1, **caractérisés en ce qu'**ils renferment en tant que composant A) un composé de formule générale (I), où

$R^1$ représente un groupe méthyle ;
$R^2$ représente un groupe trifluorométhyle ;
$R^3$ représente un atome d'hydrogène ou un groupe méthyle ;
$R^4$ représente un groupe méthyle ou éthyle ;
$R^5$ représente un atome d'hydrogène et
n vaut 2.

**3.** Agents herbicides selon la revendication 1 ou 2, **caractérisés en ce que** le rapport en poids de A:B des herbicides combinés A) et B) se trouve dans le domaine de 1:50 à 50:1.

**4.** Agents herbicides selon la revendication 3, où le rapport en poids de A:B des herbicides combinés A) et B) se trouve dans le domaine de 1:20 à 20:1.

**5.** Agents herbicides selon l'une des revendications 1 à 4, **caractérisés en ce qu'**ils renferment de 0,1 à 99 % en masse d'herbicides A) et B) et de 99 à 0,1 % en masse d'adjuvants de formulation usuels dans le domaine phytosanitaire.

**6.** Procédé pour la lutte contre la végétation indésirable, **caractérisé en ce qu'**on applique un ou plusieurs herbicides A) avec un ou plusieurs herbicides B) aux mauvaises herbes, à des parties de ces plantes ou à la surface cultivable, la combinaison des herbicides A) et B) est définie comme dans une des revendications 1 à 5.

**7.** Utilisation d'une combinaison d'herbicides A) et B) en tant qu'agent herbicide pour lutter contre la végétation indésirable, la combinaison des herbicides A) et B) est définie selon les revendications 1 à 5.